# EUROPEAN PATENT APPLICATION

(11) **EP 1 763 264 A2**
(43) Date of publication of application: **14.03.2007**
(21) Application number: 06124084.2
(22) Date of filing: 12.12.2003
(51) Int. Cl.: H04Q 7/30

(54) **Improved OpenRAN architecture for Radio Network Controller, Mobile Communication System and method of controlling Radio Base Station device**

(30) Priority: 12.12.2002 JP 2002360858
(62) Divisional of application: 03028763.5
(71) Applicant: NEC CORPORATION, Tokyo (JP)
(72) Inventor: Taketsugu, Masanori, Tokyo (JP)
(74) Representative: Betten & Resch

(57) **Abstract**

In a radio network controller for controlling a radio base station device for making a communication with a movable terminal through a radio link, first control means for controlling a transfer of a control signal or signalling is provided separately from second control means for controlling a transfer of user data related to the terminal. A control dependent on a particular radio transmission scheme is conducted in the second control means.

## Description

### BACKGROUND OF THE INVENTION

### 1. Field of the Invention:

The present invention relates to a radio network controller for controlling a radio base station device which makes radio communications with mobile terminals, a mobile communication system, and a method of controlling the radio base station device.

### 2. Description of the Related Art:

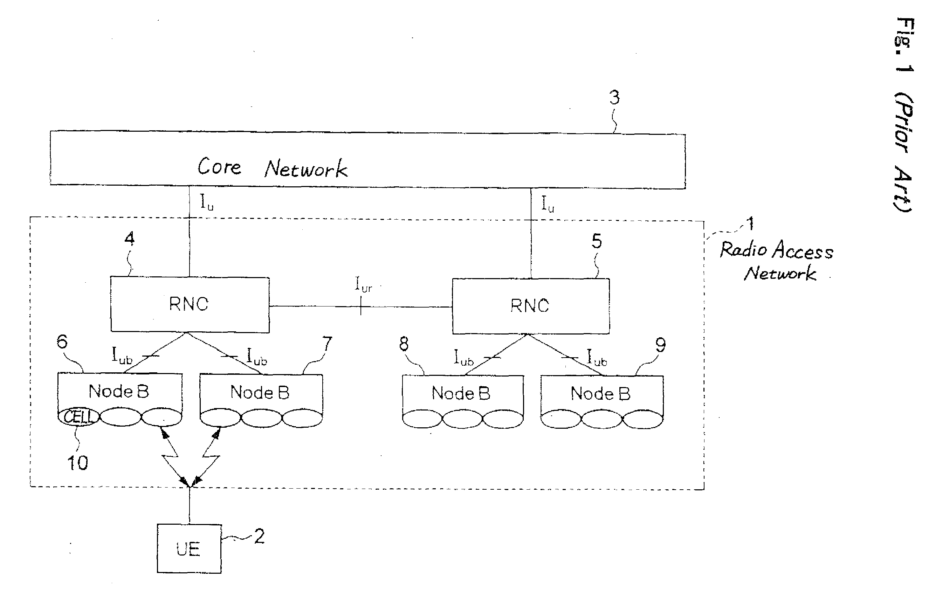

Fig. 1 illustrates the architecture of a W-CDMA communication system which is a mobile communication system.

As illustrated in Fig. 1, radio access network (RAN) 1 comprises radio network controllers (RNC) 4, 5, and Nodes B 6 - 9. Radio access network (RAN) 1 is also connected to core network (CN) 3, which is an exchanger network, through an lu interface. It should be noted that Nodes B 6 - 9 represent logical nodes for radio communications, and specifically, they are radio base station devices.

The interface between Node B and RNC is called "lub," and an lur interface is also defined as an interface between RNCs. Each of Nodes B 6 - 9 covers one or a plurality of cells 10, and is connected to mobile terminal (UE) 2 through a radio interface. Nodes B terminate a radio link, while the RNC manages Nodes B and selectively composes radio paths upon soft handover. Details on the architecture illustrated in Fig. 1 is defined in 3GPP (3rd Generation Partnership Projects).

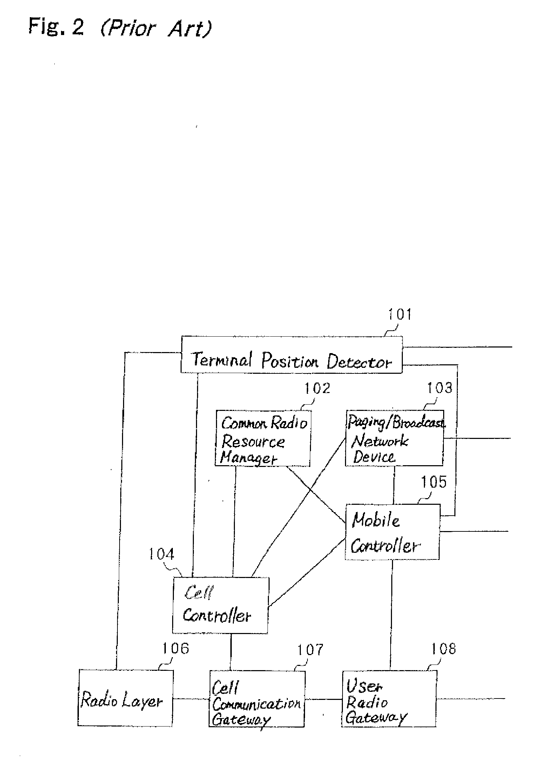

Fig. 2 is a block diagram illustrating the configuration of an exemplary open RAN architecture which comprises RNCs 5, 6 and Nodes B 6 - 8 shown in Fig. 1.

As illustrated in Fig. 2, this prior art example comprises terminal position detector 101 for collecting and calculating the positions of terminals; common radio resource manager 102 for managing a radio access network environment to optimize a network load; paging/broadcast network device 103 for controlling the flow of radio broadcast/multicast and communicating the state of the radio broadcast/multicast; self controller 104 for controlling permission of a radio access to each radio base station device, as well as congestion and assignment of the radio base station device; mobile controller 105 for establishing and releasing a communication channel; cell communication gateway 107 for transmitting individual radio channel signals and multiplexing/demultiplexing common radio channel signals; user radio gateway 108 responsible for encryption and decryption of radio channels, compression of a header, multiplexing/demultiplexing, and retransmission control; and radio layer 106 for generating positional information on terminals, encoding and decoding radio channels or controlling the power of radio links,

In the open RAN architecture configured as described above, self controller 104 controls radio accesses to each radio base station device. For this purpose, control signals are communicated between self controller 104 and cell communication gateway 107 and radio layer 106 for controlling radio accesses (for example, as disclosed in Mobile Wireless Internet Forum (MWIF) "Open RAN Architecture in 3rd Generation Mobile Systems Technical Report MTR-007" v1.0.0 (12 June 2001).

Each of RNCs 4, 5 in radio access network (RAN) 1 as described above has a function of controlling a C-plane and a function of controlling a U-plane, which are physically integrated with each other.

In a mobile communication system which has RNC provided with the integrated functions of controlling the C-plane and U-plane, the overall RNC must be added for improving the signalling processing capabilities, even though the addition of the C-plane control function is only required. Also, the overall RNC must be added for increasing a user data transfer speed, even though the addition of the U-plane control function is only required. As appreciated, the RNC in the conventional configuration presents difficulties in building a highly scalable system.

In addition, the foregoing mobile communication system suffers from the following problems in the event of a soft handover. In a normal call setting, one radio link is connected between the RNC and Node B, whereas when a moving UE (mobile terminal) requires a soft handover, two or more paths are connected between the RNC(s) and a plurality of Nodes B. Then, as the soft handover is established across RNCs, the paths are connected by use of an interface, called "lur" (see Fig, 1), between a serving RNC and a drift RNC.

During the soft handover situation across RNCs as described above, even though a path for user data can be connected from one U-plane control function unit to a plurality of Nodes B involved in the soft handover, a path must be connected between the serving RNC and drift RNC for the purpose. This gives rise to drawbacks of useless resources and a delay caused by the path connected via the RNCs.

To address the drawbacks, techniques have been devised for separating the U-plane control function and C-plane control function.

When the U-plane control function and C-plane control function are separated in the architecture illustrated in Fig. 2, it is contemplated to implement the C-plane control function by terminal position detector 101, common radio resource manager 102, paging/broadcasting network device 103, cell controller 104, and mobile controller 105, while the U-plane control function is implemented by cell communication gateway 107 and user radio gateway 108.

In the conventional architecture as described above, the cell controller controls radio accesses to respective radio base station devices to communicate control signals for controlling radio accesses between the cell controller and the cell communication gateway and radio layer, Thus, when the components of the architecture are separated into one group comprised of the terminal position detector, common radio resource manager, paging/broadcast network device, cell controller, and mobile controller to implement the C-plane control function, and the other group comprised of the cell communication gateway and user radio gateway to implement the U-plane control function, a significant amount of signals should be communicated between the components used to implement the C-plane control function and the components used to implement the U-plane control function in order to control radio accesses, causing a problem of complicated control involved therein,

Also, when the foregoing technique is applied to radio communication systems which employ different radio transmission schemes, the respective components used to implement the C-plane control function and the respective components used to implement the U-plane control function must be provided as much as the number of radio transmission schemes, resulting in a larger scale and an increased cost of the resulting open RAN architecture.

### Summary of the Invention

It is an object of the present invention to provide a radio network controller, mobile communication system, and a method of controlling a radio base station device, which are capable of alleviating the complicated control of signal communications between devices, even with the ability to build a highly scalable system, and avoiding an unnecessary increase in scale even when different radio transmission schemes are used.

The present invention provides a radio network controller for controlling a radio base station device for making a communication with a movable terminal through a radio link, wherein first control means for controlling a transfer of a control signal or signalling is provided physically separately from second control means for controlling a transfer of user data related to the terminal, and a control dependent on a particular radio transmission scheme is conducted in the second control means.

With the foregoing configuration, the first control means alone may be added for improving the processing capabilities associated with signalling, while the second control means alone may be added for improving the processing capabilities associated with a transfer of user data. In this way, the control dependent on a particular radio transmission scheme is fully conducted in the second control means, even with the ability to build a highly scalable system configuration, thus eliminating the need for communicating signals for controlling radio accesses between the first control means and second control means.

Also, when applied to mobile communication systems which employ different radio transmission schemes, the second control means as much as the number of the different radio transmission schemes may be provided for performing the control consistent with the respective radio schemes, while the first control means controls all the second control means in common. The resulting system can support multiple areas in a small scale.

Further, when a radio network controller has first control means for performing a control related to terminal resources for a terminal, and second control means, provided physically separately from the first control means, for performing a control related to base station resources for a radio base station, the control related to the base station resources is fully conducted in the second control means, even with the ability to build a highly scalable system configuration, thus resulting in the elimination of the need for communicating signals for controlling radio accesses between the first control means and second control means, as well as in the ability to support multiple areas in a small scale.

The above and other objects, features, and advantages of the present invention will become apparent from the following description with reference to the accompanying drawings which illustrate an example of the present invention.

### Brief Description of the Drawings

Fig. 1 is a diagram illustrating the architecture of a W-CDMA communication system which is a mobile communication system;
Fig. 2 is a block diagram illustrating the configuration of an exemplary open RAN architecture which comprises RNC and Node B shown in Fig. 1;
Fig. 3 is a block diagram illustrating the configuration of one embodiment of an open RAN architecture according to the present invention which comprises a radio network controller and a radio base station device;
Fig. 4 is a diagram for explaining that the scalability can be ensured between a terminal resource control unit and a base station resource control unit shown in Fig. 3;
Fig. 5 is a sequence diagram representing a soft handover in the mobile communication system illustrated in Figs. 3 and 4;
Fig. 6 is a diagram illustrating the configuration of a conventional network, and the flow of user data and control signals within the network;
Fig. 7 is a schematic diagram illustrating the configuration of a network in which RNC is divided into a terminal resource control unit and base station resource control units, and the base station resource control units are respectively incorporated in Nodes B;
Fig. 8 is a flow diagram representing an example, wherein terminal UE, which has had no radio link, sets a radio link through two Nodes B;
Fig. 9 is a flow diagram representing an example, wherein a mobile terminal, which already has a radio link, newly adds a radio link through Node B to result in a soft handover situation;
Fig. 10 is a diagram illustrating an exemplary flow of user data and control signals in an IP network; and
Fig. 11 is a diagram illustrating another exemplary flow of user data and control signals in the IP network.

### Detailed Description of the Preferred Embodiments

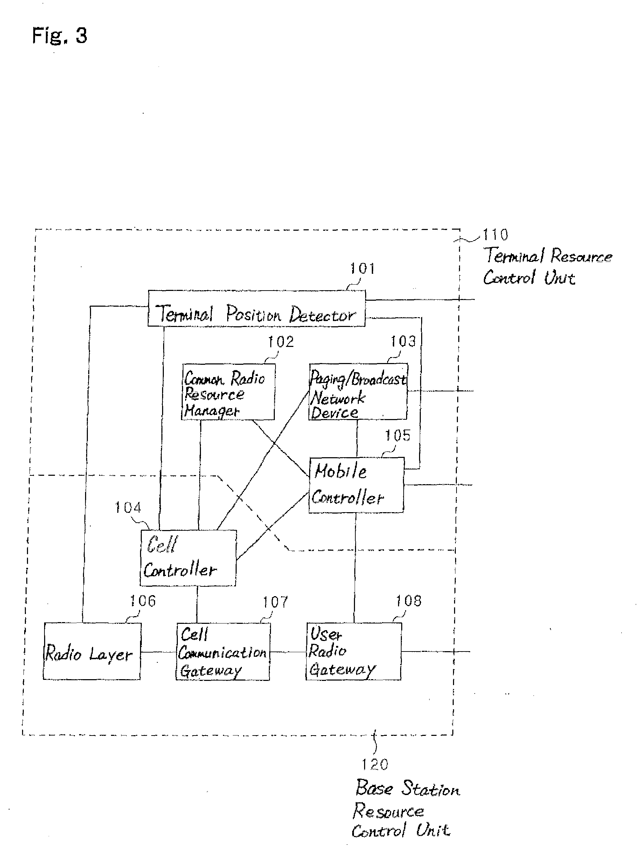

Fig. 3 is a block diagram illustrating the configuration of one embodiment of an open RAN architecture according to the present invention which comprises a radio network controller and a radio base station device.

As illustrated in Fig, 3, the open RAN architecture according to this embodiment comprises terminal position detector 101 for collecting and calculating the positions of terminals; common radio resource manager 102 for managing a radio access network environment to optimize a network load; paging/broadcast network device 103 for controlling the flow of radio broadcast/multicast and communicating the state of the radio broadcast/multicast; cell controller 104 for controlling permission of a radio access to each radio base station device, as well as congestion and assignment of the radio base station device; mobile controller 105 for establishing and releasing a communication channel; cell communication gateway 107 for transmitting individual radio channel signals and multiplexing/demultiplexing common radio channel signals; user radio gateway 108 responsible for encryption and decryption of radio channels, compression of a header, multiplexing/demultiplexing, and retransmission control; and radio layer 106 for generating positional information on terminals, encoding and decoding radio channels or controlling the power of radio links. These components are similar to the counterparts shown in Fig. 2.

In this embodiment, a first control means, represented by terminal resource control unit 110, is implemented by components for controlling terminal resources, which include terminal position detector 101, common radio resource manager 102, paging/broadcast network 103, and mobile controller 105, while a second control means, represented by base station resource control unit 120, is implemented by components for controlling base station resources, which include radio layer 106, cell communication gateway 107, and user radio gateway 108.

As described above, the open RAN architecture of this embodiment is configured such that a block for controlling a radio base station device is physically separated into terminal resource control unit 110 which is independent of any radio transmission scheme in its control, and a base station resource control unit 120 which is dependent on a particular radio transmission scheme in its control, thereby making it possible to provide a highly scalable system configuration. Specifically, only terminal resource control unit 110 may be added for improving the signalling processing capabilities, whereas only base station resource control unit 102 may be added for increasing the user data transfer speed.

Also, in this embodiment, since the radio-specific control components are all contained in base station resource control unit 120, no need exists for communicating a large amount of signals between devices even if the U-plane control function is separated from the C-plane control function.

Further, in an application to mobile communication systems which employ different radio transmission schemes, base station resource control units 120 as much as the number of the radio transmission schemes may be provided for performing the control consistent with the respective radio transmission schemes. Terminal resource control unit 110 in turn controls all base station resource control units 120 in common, enabling the open RAN architecture of this embodiment to support multiple areas in a small scale.

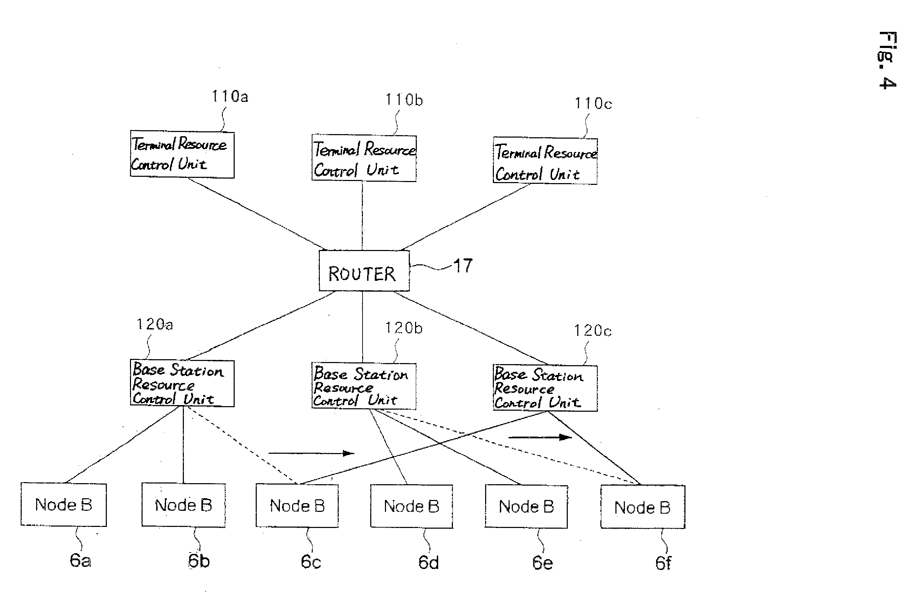

Referring next to Fig. 4, description will be made on the ability of the foregoing embodiment to ensure the scalability between terminal resource control unit 110 and base station resource control unit 120 shown in Fig. 3.

Terminal resource control units 110a - 110c are connected to base station resource control units 120a - 120c through device 17 such as an IP router, a hub, or the like. Conventionally, since terminal resource control unit 110 and base station resource control unit 120 have been incorporated in a single RNC device, additional RNCs must be provided for extension. However, since terminal resource control unit 110 is responsible for signalling processing such as a call processing, an increase in the amount of calls would result in insufficient processing capabilities of terminal resource control unit 110. In this event, the processing load can be readily distributed by newly adding terminal resource control unit(s) 110.

For example, assume an algorithm defined for use with two terminal resource control units 110a, 110b, which directs the use of terminal resource control unit 110a when the least significant digit of the terminal number n assigned to each mobile terminal is an even number, and directs the use of terminal resource unit 110b when the least significant digit is an odd number. When this algorithm is applied for use with three terminal resource control units 110a - 110c, the processing capabilities can be readily enhanced approximately by a factor of 1,5 by modifying the algorithm to direct the use of terminal resource control unit 110c when the least significant digit of the terminal number is 0, 1, 2, or 3.

Other than the foregoing, base station resource control unit 120 is also responsible for user data transfer, so that it could be short of the processing capabilities if each mobile terminal transfers an increased amount of data to be communicated. In this event, the processing load can be readily distributed by newly adding base station resource control unit(s) 120. For example, the transfer speed can be readily increased by a factor of 1.5 by modifying the configuration which comprises two base station resource control units 120a, 120b, each of which has three of radio base station devices or Nodes B 6a - 6f connected thereto to an enhanced configuration which comprises three base station resource control units 120a, 120b, 120c, each of which has two of Nodes B 6a - 6f connected thereto.

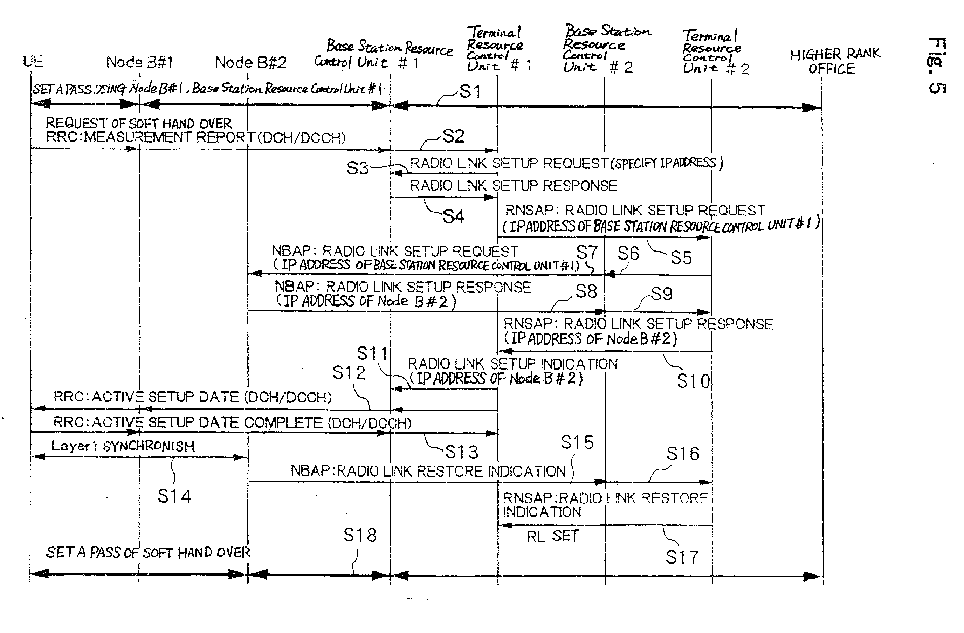

Fig. 5 illustrates a sequence in the mobile communication system illustrated in Figs. 3 and 4, which covers from a voice communication performed by a mobile terminal or terminal UE at step S1 using Node B#1 (6a) and base station resource control unit #1 (120a) to a request for a soft handover with Node B#2 (6b) made by terminal UE, and to the connection of a path between terminal UE and Node B#2.

Terminal resource control unit #1 (110a) manages resources of base station resource control unit #1 and Node B#1. Terminal resource control unit #2 (110b) in turn manages resources of base station resource control unit #2 (120b) and Node B#2.

A request for a soft handover is communicated from terminal UE to terminal resource control unit #1 through Node B#1 and base station resource control unit #1 as "MEASUREMENT REPORT (RRG)" at step S2.

Next, at step S3, terminal resource control unit #1 acquires the IP address for a soft handover to base station resource control unit #1, and notifies base station resource control unit #1 of the IP address together with "RADIO LINK SETUP REQUEST" based on megacop (IETF RFC3015).

Next, at step S4, base station resource control unit #1 responds based on megacop (IETF RFC3015) by sending "RADIO LINK SETUP RESPONSE" to terminal resource control unit #1.

Next, at step S5, terminal resource control unit #1 transmits the IP address of base station resource control unit #1, acquired for a soft handover, together with "RADIO LINK SETUP REQUEST (RNSAP)," to terminal resource control unit #2 which manages Node B#2 to which terminal UE should be handed over.

Next, at steps S6, S7, terminal resource control unit #2 transmits the IP address of base station resource control unit #1, acquired for a soft handover, together with "RADIO LINK SETUP REQUEST (NBAP)", to Node B#2 through base station resource control unit #2.

Next, at steps S8, S9, when Node B#2 notifies terminal resource control unit #2 of "RADIO LINK SETUP REQUEST (NBAP)," Node B#2 notifies terminal resource control unit #2 of the IP address of Node B#2 through base station resource control unit #2.

Next, at step S10, terminal resource control unit #2 notifies terminal resource control unit W1 of the IP address of Node B together with "RADIO LINK SETUP REQUEST (RNSAP)."

Next, at step S11, terminal resource control unit #1 notifies base station resource control unit #1 of the IP address of Node B#2 through "RADIO LINK SETUP INDICATION."

These means cause the IP address of Node B#2 to be notified to base station resource control unit #1, and the IP address of base station resource control unit #1 to be notified to Node B#2, resulting in a situation in which user data can be communicated. Simultaneously with this, at step S12, terminal resource control unit #1 notifies terminal UE of "ACTIVE SET UPDATE (RRC).".

Next, at step S13, "ACTIVE SET UPDATE COMPLETE (RRC)" is notified from terminal UE to terminal resource control unit #1. This causes the start of radio synchronization between terminal UE and Node B#2 at step S14.

After completion of the layer-1 synchronization for a radio link between terminal UE and Node B#2, Node B#2 notifies terminal resource control unit #2 of "RADIO LINK RESTORE INDICATION (NBAP)" through base station resource control unit #2 at steps S15, S16.

Next, at step S17, terminal resource control unit #2 transmits "RADIO LINK RESTORE INDICATION (RNSAP)" to terminal resource control unit #1. Thus, a setting is completed for a path between terminal UE and Node B#2, followed by step S18 at which a soft handover path is set for connecting terminal UE to one base station resource control unit #1 through Node B#1 and Node B#2.

In this way, for setting a soft handover path across RNCs, the mobile communication system of the foregoing embodiment connects paths from a single base station resource control unit to a plurality of Nodes B, without setting a path between the drift RNC and serving RNC with respect to user data, as is the case with the prior art, thereby enabling the soft handover. Consequently, the mobile communication system of this embodiment can continuously utilize the same base station resource control unit, eliminate a path between RNCs, effectively utilize resources, and prevent a delay caused by passing through RNCs.

An exemplary modification may be made to the foregoing, wherein the RNC is separated into a terminal resource control unit and a base station resource control unit, and the base station resource control unit is incorporated in Node B. In this modification, when the base station resource control unit incorporated in the Node B does not have a function of selectively composing user data, no soft handover can be carried out through a plurality of Nodes B. It can be said that this abandons the advantage provided by using CDMA in a radio section. To address this inconvenience, each Node B may be provided with a function of selectively composing user data to make communications between Nodes B.

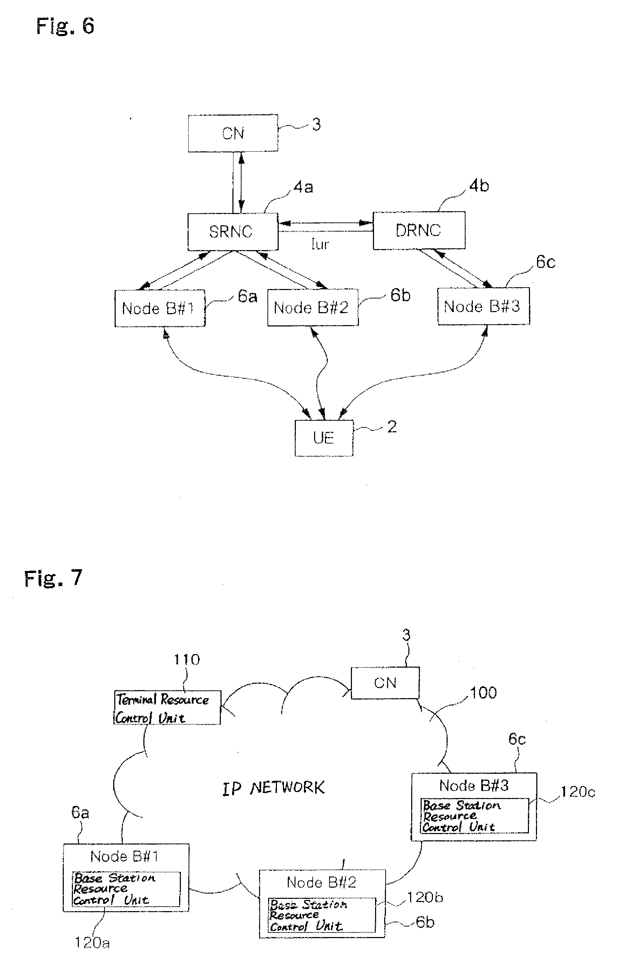

In the network configuration illustrated in Fig. 6, when a soft handover under way involves a plurality of Nodes B 6a - 6c, SRNC (serving RNC) 4 terminates user data and control signals, On the other hand, when a soft handover under way involves a plurality of RNCs, user data and control signals are transferred from DRNC (drift RNC) 4a to SRNC 4b through interface lur.

Fig. 7 is a schematic diagram illustrating the configuration of a network in which the RNC is divided into terminal resource control unit 110 and base station resource control units 120a - 120c, and the base station resource control units 120a - 120c are incorporated in Nodes B 6a - 6c, respectively.

Node B 6a-6c, terminal resource control unit 110 and CN3 are connected each other through IP network.

The following description will be focused on how a handover is carried out including a plurality of Nodes B. Assume herein that terminal resource control unit 110 knows the IP address of each Node B.

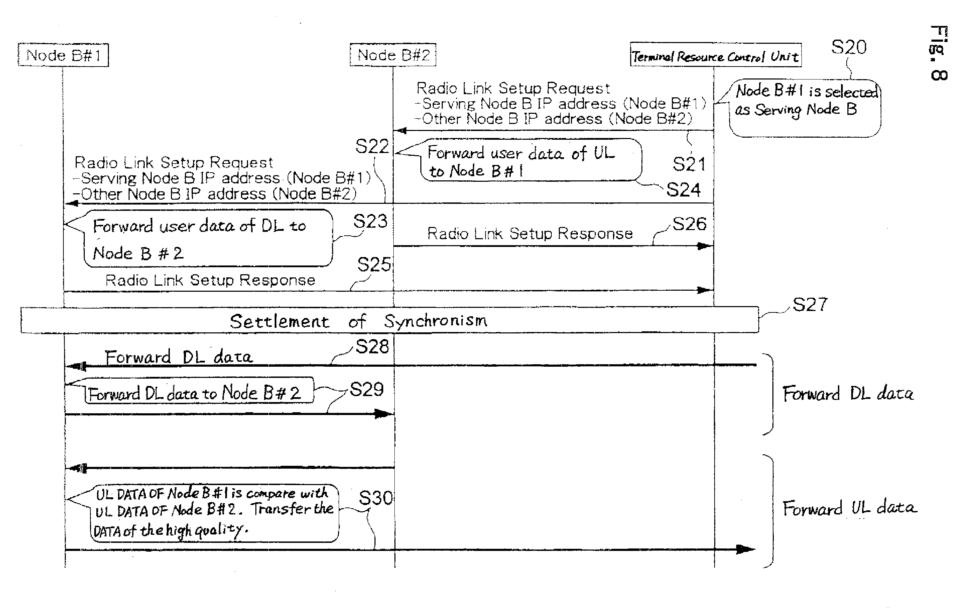

Fig. 8 is a flow diagram representing an example, wherein terminal UE, which has had no radio link (RL), sets a radio link (RL) through two Nodes B.

First, at step 20, the terminal resource control unit selects Node B, which is assigned to be a serving node (Node B#1 in Fig. 8), from a plurality of Nodes B (Node B#1 and Node B#2 in Fig. 8).

Next, at steps S21, S22, the terminal resource control unit notifies each Node B of the ID address of the serving Node B (Node B#1 in Fig. 8) and the ID address of the other Node B (Node B#2 in Fig. 8) through a "Radio Link Setup Request" message in such a manner that the difference between the two ID addresses is perceivable.

The terminal resource control unit specifies a Node B which controls the cell of the highest quality as the serving Node B. At step S23, each Node B compares its own IP address with the IP address of the serving Node B, and recognizes that the Node B itself is the serving Node B when its own IP address is equal to the IP address of the serving Node B.

The remaining Nodes B recognize at step S24 that the IP address of the serving Node B is the destination of UL (uplink) data.

After ensuring resources required for setting a radio link, each Node B transmits a "Radio Link Setup Response" message back to the terminal resource control unit at steps S25, S26.

Subsequently, at step S27, the synchronization of U-plane is established.

At step S28, for a DL (downlink) data transfer, the serving Node B transfers data to the IP addresses of other Nodes B which have been notified thereto through the "Radio Link Setup Request" message at step S29.

For a UL (uplink) data transfer, the serving Node B compares data received from the respective Nodes B at step S30 to transfer the data of the highest quality to a higher rank.

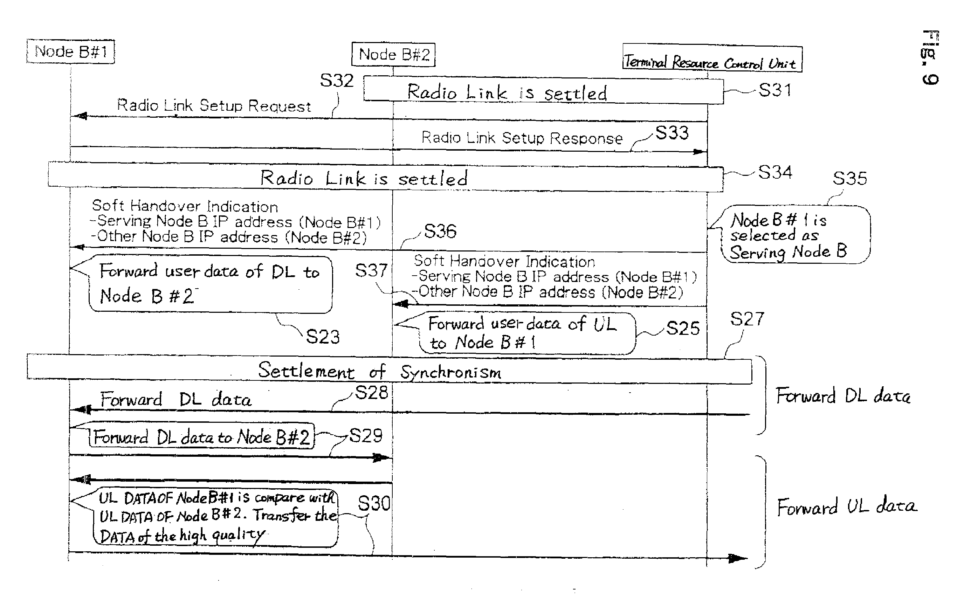

Fig. 9 is a flow diagram representing an example, wherein a mobile terminal, which already has a radio link, newly adds a radio link through a Node B to result in a soft handover situation.

In this event, it is necessary to notifies the IP address of the serving Node B and the IP addresses of Nodes B included in a soft handover to a Node B (Node B#2 in Fig. 9) for which a radio link has been set at step S31.

In doing so, first, at steps S32 - S34, a radio link is set for a new Node B (Node B#1 in Fig. 9) using a "Radio Link Setup Request" message and a "Radio Link Setup Response" message, followed by a notification of the IP address of the serving Node B and the IP addresses of Nodes B involved in the soft handover to all the Nodes B involved in the soft handover.

As a means for this purpose, a "Soft Handover Indication" message is newly proposed at steps S36, S37.

This message contains the IP address of the serving Node B and the IP addresses of Nodes B involved in the soft handover. The subsequent operations are similar to those in Fig. 8, and therefore are designated the same reference numerals.

While the sequences shown in Figs. 8 and 9 give an example of a soft handover which involves two Nodes B, the foregoing mechanism can be applied as welt when more than two Nodes B are involved in a soft handover. In this event, a plurality of IP addresses should be set in "Other Node B IP addresses" at steps S36, S37 in Figs. 8 and 9.

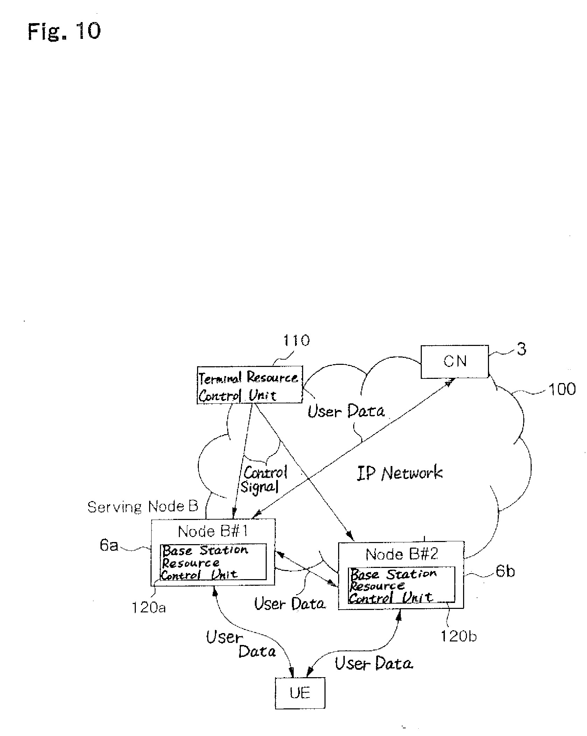

Fig. 10 is a diagram illustrating an exemplary flow of user data and control signals in an IP network, corresponding to the sequence of Fig. 9.

While an example has been given for Nodes B, each of which is provided with a selective composition function, the manufacturing cost of the Node B is disadvantageously increased if each Node B is provided with the selective composition function. To solve this problem, only one of a plurality of Nodes B may be provided with the selective composition function. In this event, in a soft handover through a plurality of Nodes B, user data is terminated by a Node B which has the selective composition function. By doing so, it is possible to maintain a soft handover function which is a feature of CDMA.

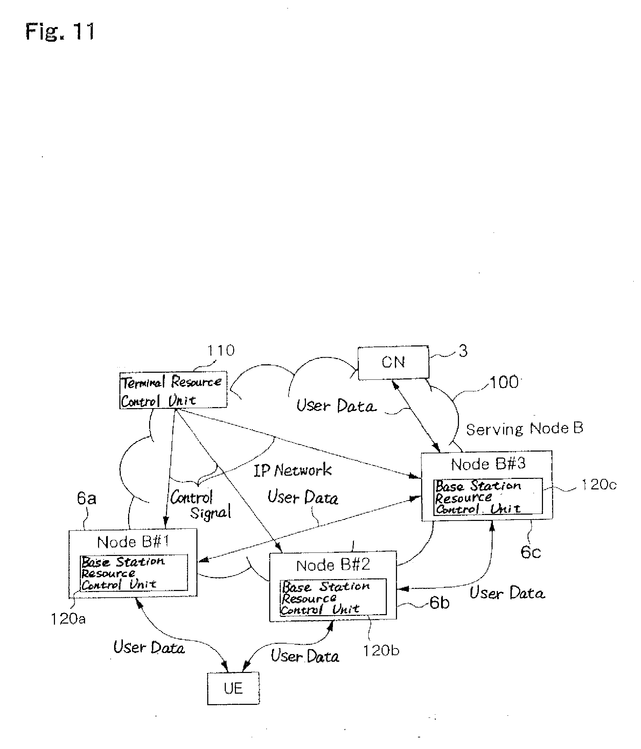

Fig. 11 is a diagram illustrating another exemplary flow of user data and control signals in IP network 100 in a mobile communication system.

While Node B#1 and Node B#2 are involved in a soft handover, Fig. 11 illustrates the flow of user data and control signal in IP network 100 when neither Node B#1 nor Node B#2 has the function of performing the selective composition, but Node B#3 (6c) has the selective composition function.

The processing as illustrated is implemented on the premise that CN 3 knows information such as the IP addresses and positions of all Nodes B included in IP network 100, whether or not each Node B has the selective composition function, how each Node B is loaded, and the like. In the flow illustrated in Fig. 11, CN 3 notifies Node B#1, Node B#2 of the IP address of a serving Node B, while Node B#1, Node B#2 transfer data to the serving Node B. Also, CN 3 instructs Node B#3 to function as a serving Node B.

For selecting a serving Node B from a Node B other than those involved in a soft handover, CN 3 takes into account the physical distance between each of the Nodes B involved in the soft handover and a Node B which functions as a serving Node B, and the loading of the serving Node B.

As described above, the present invention can build a highly scalable system configuration, while the radio transmission scheme dependent control is fully performed by the second control means, so that no need exists for communicating signals between the first control means and second control means for controlling radio accesses, thereby alleviating the complicated communications of signals between devices.

Also, when applied to mobile communication systems which employ different radio schemes, the second control means as much as the number of the radio transmission schemes may be provided for performing the control consistent with the respective radio transmission schemes, while the first control means controls all the second control means in common, enabling the mobile communication system of the present invention to support multiple areas in a small scale.

While a preferred embodiment of the present invention has been described in specific terms, such description is for illustrative purposes only, and it is to be understood that changes and variations may be made without departing from the scope of the following claims.

## Claims

1. A radio network controller for controlling a radio base station device for making a communication with a movable terminal through a radio link, comprising:
a block for controlling said radio base station device, said block being physically divided into two subblocks, wherein a control dependent on a particular radio transmission scheme is performed only in one of said two subblocks.

2. A radio network controller for controlling a radio base station device for making a communication with a movable terminal through a radio link, comprising:
first control means for performing a control independent of any radio transmission scheme; and
second control means physically separated from first control means for performing a control dependent on a particular radio transmission scheme.

3. A radio network controller comprising:
first control means for controlling a radio base station device for making a communication with a movable terminal through a radio link, and for controlling a transfer of a control signal or signalling; and
second control means physically separated from said first control means for controlling a transfer of user data associated with said terminal,
said second control means having a radio transmission scheme dependent control function.

4. A radio network controller for controlling a radio base station device for making a communication with a movable terminal through a radio link, comprising:
first control means for performing a control related to terminal resources for said terminal; and
second control means physically separated from said first control means for performing a control related to base station resources for said radio base station device.

5. A radio network controller according to one of claims 2 to 4, wherein:
said first control means comprises at least:
common radio resource managing means for managing a radio access network environment to optimize a network load; and
mobile controller for establishing and releasing a communication channel, and
said second control means comprises at least:
cell controller for controlling a permission to a radio access to each radio base station device, as well as congestion and assignment of said each radio base station device;
cell communication gateway for transmitting individual radio channel signals and multiplexing/demultiplexing common radio channel signals; and
a user radio gateway for performing encryption and decryption of radio channels, compression of a header, multiplexing/demultiplexing, and a retransmission control.

6. A mobile communication system comprising at least:
movable terminal;
radio base station device for making a communication with said terminal through a radio link; and
radio network controller for controlling said radio base station device,
wherein said radio network controller has a block for controlling said radio base station device, said block being physically separated into two subblocks, such that a control dependent on a particular radio transmission scheme is performed only in one of said two subblocks.

7. A mobile communication system comprising at least:
movable terminal;
radio base station device for making a communication with said terminal through a radio link; and
radio network controller for controlling said radio base station device, wherein said radio network controller is physically separated into first control means for performing a control independent of any radio transmission scheme, and second control means for performing a control dependent on a particular radio transmission scheme.

8. A mobile communication system comprising at least:
movable terminal;
radio base station device for making a communication with said terminal through a radio link; and
radio network controller for controlling said radio base station device,
wherein said radio network controller comprises first control means for controlling a transfer of user data associated with said terminal, and second control means physically separated from said first control means for controlling a transfer of a control signal or signalling, said second control means having a radio transmission scheme dependent control function.

9. A mobile communication system comprising at least:
movable terminal;
radio base station device for making a communication with said terminal through a radio link; and
radio network controller for controlling said radio base station device,
wherein said radio network controller comprises:
first control means for performing a control related to terminal resources for said terminal; and
second control means physically separated from said first control means, for performing a control related to base station resources for said radio base station device.

10. A mobile communication system according to one of claims 7 to 9, wherein:
said first control means comprises at least:
common radio resource managing means for managing a radio access network environment to optimize a network load; and
mobile controller for establishing and releasing a communication channel, and
said second control means comprises at least:
cell controller for controlling a permission to a radio access to each radio base station device, as well as congestion and assignment of said each radio base station device;
cell communication gateway for transmitting individual radio channel signals and multiplexing/demultiplexing common radio channel signals; and
user radio gateway for performing encryption and decryption of radio channels, compression of a header, multiplexing/demultiplexing, and a retransmission control.

11. A method of controlling a radio base station device in a radio network controller, said method comprising the steps of:
physically separating a block for controlling said radio base station device into two subblocks; and
performing a control dependent on a particular radio transmission scheme only in one of said two subblocks.

12. A method of controlling a radio base station device in a radio network controller, said method comprising the steps of:
controlling said radio base station device independently of any radio transmission scheme in first control means; and
controlling said radio base station device depending on particular radio transmission scheme in second control means physically separated from said first control means.

13. A method of controlling a radio base station device in a radio network controller, said radio network controller having first control means for controlling a transfer of a control signal or signalling, and second control means physically separated from said first control means for controlling a transfer of user data related to a movable terminal, said method comprising the step of:
performing a control dependent on a particular radio transmission scheme only in said second control means.

14. A method of controlling a radio base station device in a radio network controller, comprising the steps of:
performing a control related to terminal resources for said terminal in first control means; and
performing a control related to base station resources for said radio base station device in second control means physically separated from first control means.

15. A method of controlling said radio base station device in a mobile communication system having at least a movable terminal, said radio base station device for making a communication with said terminal through a radio link, and a radio network controller for controlling said radio base station device, said method comprising the steps of:
physically separating a block for controlling said radio base station device in said radio network controller into two subblocks; and
performing a control dependent on a particular radio transmission scheme only in one of said two subblocks.

16. A method of controlling said radio base station device in a mobile communication system having at least a movable terminal, a radio base station device for making a communication with said terminal through a radio link, and a radio network controller for controlling said radio base station device, comprising the steps of:
controlling said radio base station device independently of any radio transmission scheme in first control means provided in said radio network controller; and
controlling said radio base station device depending on a particular radio transmission scheme in second control means provided in said radio network controller and physically separated from said first control means.

17. A method of controlling said radio base station device in a mobile communication system having a radio network controller including first control means for controlling a transfer of a control signal or signalling, and second control means for controlling a transfer of user data related to a movable terminal, said radio network controller being configured to control a radio base station device for making a communication with said terminal through a radio link, comprising the step of:
performing a control dependent on a particular radio transmission scheme only in said second control means.

18. A method of controlling said radio base station device in a mobile communication system having at least a movable terminal, said radio base station device for making a communication with said terminal through a radio link, and a radio network controller for controlling said radio base station device, comprising the steps of:
performing a control related to terminal resources for said terminal in first control means provided in said radio network controller; and
performing a control related to base station resources for said radio base station device in second control means provided in said radio network controller and physically separated from first control means.
